# EUROPEAN PATENT APPLICATION

(11) **EP 1 076 336 A2**
(43) Date of publication of application: **14.02.2001**
(21) Application number: 00305860.9
(22) Date of filing: 11.07.2000
(51) Int. Cl.: G11B 20/00, G06F 1/00

(54) **Method and device for storing, selecting and playing digital audio in magnetic memory and electronic security system against unauthorized copies**

(30) Priority: 12.07.1999 AR 9913372; 04.07.2000 AR 0013406
(71) Applicant: DCS Desarrollos Tecnologicos S.A., (8000) Bahia Blanca, Buenos Aires (AR)
(72) Inventor: Vulich, Marcelo Héctor, Buenos Aires (AR)
(74) Representative: Neobard, William John

(57) **Abstract**

A method and a device for storing audio information in magnetic memory, an electronic arrangement for protecting the computing program and a method of protection against non-authorized duplications is presented. The device of the invention allows, by means of an entrance signal, preferably a bar code reader, to select the information and the content of a product, preferably a CD of commercial music, that is stored in a magnetic memory in digital form. The audio information, preferably music, is converted into computing formatted information by means of well-known software and is stored compressed with a high compression ratio. The original audio parameters that are lost during the compression are stored in a complementary memory and are outputted simultaneously, and therefore the audible signal that reaches the user through earphones and/or loudspeakers recovers its high quality sound, reproducing the file with no need for decompressing it. The method also offers technical control checking for the device and statistics logging based on the playback requests carried out by the users.

The integrity of software and the authenticity of the device are protected by means of an anti-copy system that is based on a microprocessor based security card.

## Description

The present invention relates to a method and device for digital audio storage, selection and playback in magnetic storage, and a security method and electronic arrangement against non-authorized copies for protecting against incorrect usage of the device and and/or non-authorized duplications of the control program.

The present invention is generally related to a new digital audio storage, selection and retrieval technique in a magnetic digital storage media, for example, a personal computer hard disk, and, in a preferred embodiment, the method relates to digital audio information storage and retrieval. In this embodiment the usage of a device that carries out the method in an audio and music tester in general is described, being these usually used in shops that sell compact discs, music cassettes and other objects of massive use and sale. However, it will be deduced, from the explanation of the present document that the novel technique described in it should not be limited to this specific application because it is useful for being applied to any other implementation that requires digital audio effective and optimised storage.

The commercial market offers an enormous variety of products of massive consumption for music and video playback that may comprehend musical products offered in compact discs, (usually called CD), magnetic tape cassettes, video compact discs (usually called DVDs), which are offered in supermarkets, household-electric stores, stores of all kinds of spare parts, retail and wholesale commerce stores, general shops and retail commerce stores, etc.

Nowadays, several massive test equipment for sale products are known, being designed for giving this information only in visual form. All of these, at present and with the available techniques, identify articles through their bar-code reading. The many bar-code reading equipments identify the product only partially, offering little information about it, as in the case of the supermarkets where the prices of the goods are indicated only by means of a display.

Regarding the sales points of music in general, many testing arrangements of the audio contents of the offered products (cassettes, compact disks or CDs, video digital discs or DVDs, etc.) are known at present. The first equipment that appeared in the market was obviously the record players, and after that magnetic tape cassette reproducers/players. When compact discs appeared, individual testers of these elements also appeared, being at present of most use and being based in the usage of a simple or multiple compact disk reproducer/player (up to six compact discs simultaneously) by means of known techniques of laser beams reading. The amount of offered products has forced new CD testing arrangements developments, which are actually in use at present. Thus, more advanced CD testers are known, being based on personal computers interconnected with a network of a known technique, in which the musical audio data is stored and available for being consulted by the potential clients via loudspeakers or earphones.

The referred existing testing equipments offer several obstacles as for example: the impossibility of the user to listen to other musical pieces other than the ones loaded in the equipment; the important investment made by the stores in setting systems that offer these products for pre-listening, and the fact that once their original package is torn, these cannot be further commercialised, either because of destruction, deterioration or wear out; the impossibility for salesmen to load all the catalogue contents offered by the different record companies, with the corresponding commercial loss that this implies; and finally a lack of adequate service towards the client and other problems that will be mentioned in the description of the previous art.

Many documents related with the technique related to the present invention are known.

US-A-5,539,829 describes a Digital Coded Sub-Band Transmission System using some compound signals. The document relates to a transmission system for playing back a digital band signal; and more closely to a system that comprises an encoder, including an analyser for altering the digital signal and therefore obtaining a great number of sub-signals to be received at several moments and places; a receiver for receiving the sub-signals and a decoder, including a synthesizer for combining the received sub-signals and consequently obtaining the respective identically reproduced digital signals. The invention also includes an encoder/transmitter and a decoder/receiver for the system. However the invention of the mentioned document is an encoder/decoder for remotely transmitting digital signals and therefore does not anticipate the present invention.

US-A-4,959,861 describes a security system for software and includes a connection circuit that is enclosed with each original software package sent by the authorized supplier. The software includes a communication system for encoding signals generated by the connection circuit. When the appropriate signal is received, the program starts running. But, if the detected code is not the appropriate one, the program shuts down. The present invention replaces the signal emitted in the system of the mentioned document, with a code which is previously encrypted and stored in a non-volatile memory, working together with a decrypter included in the executable program, which checks the identity of the mentioned device, making on this code an inverse process of decryption for comparing the obtained parameters. Therefore the present invention is not anticipated by the mentioned document.

US-A-4,670,857 describes a cartridge controller system which may be only used with authorized cartridges. In the mentioned document there are program instruction blocks designed for letting a machine run, being these blocks encrypted by the manufacturer by means of a private key and a set of public keys for decrypting. The machine, during the initialisation, followed by the insertion of a new cartridge, decrypts the information strings stored in the cartridge via the use of public keys, and stores the obtained elements in random access memory. Then, the machine microprocessor incorporates the instructions in the random access memory. Although the public key can be widely known, as the private keys remain secret, there is no way that a non authorized software/cartridge distributor may encrypt a program in such a way that the following decryption in the machine results in an intelligent sequence of instructions. The invention of the mentioned document uses an encryption system stored in a cartridge comprising a private key and then uses an auxiliary random access volatile memory (RAM) for a decryption and comprising a public key. The present invention, however, uses an arrangement in which a proprietary security key is connected to the serial output RS232 of the device as a means for checking, being decrypted within the same control program (executable) for operation authorization. The difference is that the invention of the mentioned patent is used for giving usage authorizations to any type of systems and offering at the same time a blocking method for these; however, the present invention only blocks the activation object program of the listening/testing device allowing the use of the rest of applications contained in the same magnetic means in an unrestricted form and without making any verification, and therefore it is not anticipated by the mentioned document.

US-A-4,646,234 describes an anti-piracy system that uses separate storage and alternative executable programs, selected parts of programs whose authorship is to be protected and public parts of computer programs. The invention of the mentioned patent describes a system and method for protecting software, and more precisely a system and method for preventing non-authorized duplication and software usage. The software protection system includes a random access volatile memory (RAM) device and one or more non-volatile memory (ROM) storage devices. The RAM and ROM memories are connected parallel to a data carrier and an address carrier. Once the desired parts of the program are selected, these are pre-stored in the ROM before they are distributed to the users system; the rest of the program remains stored in an external storage means, as for e.g. a diskette. When the program is used, the portion of the program that is externally stored is loaded in the RAM memory. At program execution, the system begins to execute on turns, that is to say, each instruction program contained in the RAM one by one, until it is ready for being transferred to one of the ROMs for executing the desired portion of the ROM stored program. If a user makes a non-authorized copy of the portion of the stored program in the external storage media, the copy will appear incomplete and will not be executable without the other portion of the program that will remain in the ROM. The system of the cited patent consists of using a program in a segmented form and at operator's requirements. The present invention, however, allows the use of the software and the memory optimisation to be made in standard form by the processor of the equipment that contains it.

US-A-4,599,489 describes a solid and permanent key for controlling access to software. The invention of the patent is based on an apparatus for allowing the access to computer programs only for authorized people; and further, for apparatuses that may be physically independent of the computer equipment, but being able of executing an algorithm that can only be run by the computer for allowing the access. The document describes a semiconductor device that works as a key for controlling the access of a resident program in the computer. The device includes a continuous pulse count generator that produces a representative real time output, a carrier register that permanently stores a unique number, and a system of circuits for executing an algorithm that combines real time checking and the permanently stored unique number, for producing a secret password. The password is entered in the computer and the computer is coded for executing an equivalent algorithm for producing a password without the latter. Both passwords are compared and the access to the program of the computer is allowed only if they maintain a preestablished relation. The invention of the mentioned patent combines an input key with a resident program in memory, being the base of the protection a signal generated between them, which is permanently checked for allowing the execution of all the existing programs within an equipment. The difference compared to the present invention is that, in the present invention, only an encrypted code is checked whenever the protected program is executed, without the need for using neither control timers nor any resident program.

US-A-4,562,306 describes a method and a device for the protection of software using an active hardware coding device. A method and an apparatus are supplied for protecting software by means of an active coding hardware device that is adapted for being connected through a connecting interface for computer communication outputs. The computer is directed through coded software in which a small portion of the software code periodically interrogates the communication ports for determining if the decoder device of the hardware is present and connected. The hardware decoder device has a fixed and preset permanent code, in an active and stable counter circuit, being this code transmitted when interrogated. If the hardware decoder device is present when it is interrogated and the correct code returns through the communication computer ports, the program is allowed to keep on running and this assures that the software is permanently protected. In case the hardware is violated, it would be necessary to construct a duplicate of the hardware device, for being able to run a second copy of the software. A great variety of logical and time elements can be added to the basic configuration for increasing the difficulty of duplication or system violation. The invention of the mentioned patent is very similar to the previously analysed one, but it does not use a resident stored program and must be applied to each file for protection. In addition to the mentioned issues in the previous comparison, the present invention is different because it uses a backup battery that not only jeopardizes the logical access key and software, but also the serial numbers of some devices such as the hard disks and BIOS (basic operating system program resident in a chip) of the equipment; in this way, in case the physical key would be emulated by software, it would be necessary to always use the same hard disks and BIOS, in which case a duplication makes no sense.

US-A-4,458,315 describes an apparatus and a method for detecting and preventing the non-authorized use of computer programs. The program to be protected is adapted for storing at first an information key and an intermediate key that is physically separated from the program; the latter is supplied to the buyer together with each program that is bought. The intermediate key stores secondary key information and is adapted for associating it with a computer in which the program will be processed. Both, the first program routine or the one developed before the significant part of the program, are adapted for accessing the first and second information key and for making an operative comparison. If the first and second information match, the user is authorized for using the program. Otherwise, the user is not authorized and the program will be interrupted. The invention of the mentioned patent uses a physical and a logical key that work independently of the programs. The present invention is based on a completely different concept from the developed one in the mentioned patent, being the differences obvious according to the previously mentioned issues.

US-A-5,557,541 describes a data distribution system for audio programs that includes a portable audio storage and a programmable retrieval device from a high speed data transfer system, which includes a high capacity data storage media, a control interface for identifying and accepting program data, a movable control interface for showing the identity of the recorded data for a selection of the programs to be played, a recording mechanism for accepting very high speed digital data from an outside source at a much faster rate than real time transfers, and a playback mechanism for recovering the stored data from the storage means and for converting data to an audio language for its playback. Briefly, the patent describes a system for recording audio program data at high speed from a remote source, using a high capacity portable audio recorder and a playback device. The invention of the mentioned patent is based on a totally mechanical system and, therefore, it does not anticipate the present invention.

US-A-5,636,276 describes a device for distributing musical information in digital format. In order to distribute musical information from a central memory device through communication by network towards a terminal, this information is organized in an object for digital music information. The latter comprises a core with basic information related to the object for music information, as well as a number of additional layers with the present musical information. The core includes an encrypter table, based on the encrypter module of the central memory device and a terminal decrypter module that respectively encrypts and decrypts the musical information object. Additionally, an interpretation module is provided in the terminal for preparing the playback of the object for musical information, giving this interpretation module access to the information for checking the authorized use of the object; the information is stored in an authorization device and identifies the terminal or the user. In this way, the invention of the mentioned patent creates a technique for the distribution of digital musical information which, on one hand, provides effective mechanisms for the copyright protection and, on the other hand, makes it possible for an increase in the services to the users. The invention of the mentioned patent is basically a system of data/audio distribution based on a network that adds the novelty of transmitting them encrypted and decrypting them in the receiving terminals. However, the present invention does not use networks, nor encrypts data of any kind, because the audio is emitted in a conventional way, and what is encrypted is only the software execution code.

US-A-5,754,646 describes a method for protecting public distribution software. A system is described for protecting the software from being copied, in which the software to be protected is placed in the computer system in two parts. A first part is stored in a non-volatile storage means, a hard disk or a diskette reader, and a second part is stored and executed in a so called "key for the hardware", which is added to the computer. The second part is stored in a volatile RAM and will be erased when the electric source is removed from the "key for the hardware", or when the software stops running. This requires the second part of software to be reloaded each time the key for the hardware is turned on. Generally speaking, the second part of software will be loaded from a network or from a cable of network; in this way, the recharging of the second part to the "key for the hardware" is an unimportant issue, only if the user is an active subscriber of the network. The invention of the mentioned patent works based on that the program to be protected must be stored in two parts, one in conventional magnetic means and the other one in the protection system. Due to the great differences between them, the mentioned patent does not anticipate the technique of the present invention.

US-A-5,826,011 describes a method for measuring and protecting software. This document describes a method for protecting software when installed, offering installation means that contain an installation program for the user along with an electrical device for hardware (HSED) guaranteeing. The HSED is connected to the user's computer before downloading the software so that the installation means can be incorporated to the user's computer. The HSED contains a great variety of secret installation data that is used for installing the program to be protected. In general, the secret installation data checks whether a specific HSED is present and if it contains information for enabling the installation process to be carried out. The exact nature of the secret installation data will depend on the processes used for the protection. The invention of the mentioned patent describes a method for protecting programs during the installation process, allowing the later use of the protected programs if this process is successfully finished. The present invention differs from the mentioned patent because it protects the execution of the control program instead of avoiding its non-authorized loading.

US-A-5,835,495 and US-A-6,044,089 describe systems of audio data transmission that codify audio files in individual audio data blocks, containing a great number of digital audio data bits that are shown in a selectable range. The number of digital audio data bits and the input sample range are placed in scale for producing a codified bit chain that is smaller or equal to the bit range of a modem. The audio data transmission system uses computing units designated for selecting an appropriate combination of blocks sizes and a sample range for optimising the bandwidth of the available modems. For example, if the connection speed of a modem is 14,4 kbps, and a compressed audio data version at 13,000 bits/s, it should to be sent to the receiver; however, if the modem connection, for another modem is 28,8 kbps, and compressed audio data version is sent at 24,255 bits/s, it should to be sent to the emitter. The audio data blocks are, then, transmitted to the codified bit chain and later to the future receiving modem. The audio data blocks are decoded in the receiver for constructing the audio file and immediately executing it as received. These transmission systems can be implemented for on-line service systems, ITV systems, computing data systems by network and communication systems. The inventions of the mentioned patents refer to systems that allow optimising the audio file transmission via modem. However, the present invention is not related to audio transmission through any communication media nor network whatsoever.

US-A-5,841,979 describes a system of increased audio data transmission. This is a system for making a selection by the user and for transferring audio data files to the user at a transference speed between 2 -100 times greater than the normal transference time, for playing back the "listeneable" data of an audio data file. The user indicates the " selection by the user" of the audio data by means of a central audio data file library and a compressed and digitised file that contains the user's selection; being the latter prepared and transmitted to the user at a high data transfer speed. The user receives the program general files in a removable high density diskette or in a PCMCIA card that can contains from 10 Megabytes to 1 Gigabyte of digitised text or audio data, using a removable hard disk or its equivalent and an universal data interface that recognizes and compensates the files generally received in any of its input ways. The user has this diskette or the PCMCIA card until having the chance of decompressing it and playing back the text files or the audio data files in a "listeneable" format. The central library contains text files and also audio files in a digitised and compressed format. The mentioned patent describes a transmission system of audio files which optimises the transference speed. However, the present invention is not related to any technique of audio remote transmission.

US-A-5,870,710 describes a transmission, recording and playback audio system. The audio recording and reproduction/playing apparatus of the mentioned patent includes a controller for verifying the general behaviour of the hard disk for audio data reading and writing, compression/expansion audio circuits, and an external I/O port. The audio recording and playback apparatus is connected to a network service for obtaining the desired musical data from the elements stored in it, being later stored in the hard disk. The apparatus of the patent is an audio reproducer/player, audio data transmitter, information receiver and recording means, specifically to be used with stereo earphones, and particularly configured for storing in a portable stereo earphone the desired audio data, transmitted externally to it. The invention of the patent is a reproducer/player where the users must use the music stored in a server and place it in their magnetic means for playing back it later. The present invention, in a preferred embodiment, is a music tester that is not designed for transferring the sounds contained in the device to any other means, allowing its listening only through the loudspeakers or earphones supplied in the invention and offers a new technique for storage capacity optimisation in magnetic memory performance.

US-A-5,914,941 describes a portable storage media/ player device with a data interface. A digital replacement for the analog recorder is described; being able of recording audio programs in digital form faster than the real time format and executing them. These programs are digitised and stored in data files using a variety of compression/decompression algorithms. The audio programs are digitally stored in non-volatile means, as, for example, a computer hard disk, in EPROM memory or in any solid and stable non-volatile memory. The device includes a hard disk, a modem for connecting the database through an on-line service, a keyboard, a display, and an audio system. The device only combines the remote access capacity of resident data in a personal computer with a set of control functions for simplifying and automating the process of selection of the audio program data. When the program data is requested from a service centre, it is automatically received, downloaded and stored in a hard disk. The program data can be reproduced/played at the moment and place the user may choose with total function control. The invention of the mentioned patent is an audio reproducer/player from which the users may take the music stored in a server, downloading it in their magnetic means for later being able to reproduce it. The present invention is, in a preferred embodiment, a music tester that is not designed for transferring the sounds contained in the device to any other means, allowing its listening only through the loudspeakers or earphones supplied in the invention and offers a novel technique of optimisation of the storage capacity in magnetic memory performance.

US-A- 5,974,387 describes a high-speed audio recompression technique for karaoke, video games and other applications. Data with sound models are compressed with a quantification by vectors technique and later transmitted through a communication line. When received, the sound data is decoded, compressed with an ADPCM technique and later stored in memory. In response to an order for playing back, the ADPCM sound data is read, decoded and later executed. For example, in a karaoke device, the data of sound models are supplied after being compressed with the quantification by vectors technique, together with musical data development in MIDI format. A musical sound is produced based on a MIDI format and, at the same time, reproduced by sound data quantified by vectors decoding. In another example, in a game device the sound models data, for example the human voice, special effects, etc., are pre-stored after being compressed with the quantification by vectors technique; that is why, according to the progression of the game, the data are read and decoded for reproducing the sounds. The present invention is an encoder/decoder of sounds that converts them to an interpretable form for being used in several applications. It transforms the digital audio to a well-known computing format, and later runs a process for reducing its size. In spite of this reduction the files can be played back by any audio reproducer of the market, but only through the use of the software of the present invention they be given back the playback quality they originally had. The main difference between these two inventions is that the invention of the mentioned patent encodes and decodes audio information; on the other hand, the present invention encodes the audio, compresses it and without decoding it, reproduces/plays the audio, but also allowing the addition of the lost properties during the encoding process for obtaining the optimal properties of playback.

The present invention reveals a method and an device for storing, selecting and playing back audio information in magnetic memory, a protection method for avoiding copies of the computing program and an electronic security arrangement (also called in this document security key or blocking key or security dongle). Embodiments of the invention allow overcoming the problems that arise in the devices of the prior art and offers, in addition to the sale price in the case of the supermarkets, another complementary information that may describe the product features or display advertising data related to it. In the case of a store that sells musical products, any theme or recording of all the themes in stock will be available for listening, because the causes for memory limitations in the pre-listening of the themes are overcome when the playback mechanical means are replaced by magnetic storage means,.

A first embodiment of the present invention is a method and a device that allows to store audio in magnetic means and later to recover an amount of its information surpassing the features of the known present techniques, without generating at the same time sound quality degrading. The method of the present invention can be divided in two complementary methods: a) a method for storing or updating the audio information and b) a method for selecting and playing back the audio that has previously been stored by means of the method (a). In both complementary audio processes, either talking recordings or recorded music, is inputted on any known digital support means, either digital audio cassette tape or digital video tape, CD or DVD. In an alternative embodiment that will not be it described in this document and that does not form part of this invention, the audio data may be read from analog means (vinyl records, conventional audio cassette tapes, etc.), for which a step should be inserted after the first one, allowing for conversion of the analog audio into digital information.

Generally speaking, the storage method is based on a conversion process for transforming the recorded digital audio data to a computing format that allows its storage in magnetic means for later recovery. The mentioned process offers a total independence between the recorded audio products or data and the test equipment which will exclusively work with talking records or pre-recorded music when converting them to computing format. It is explained that the expression "computing format" refers to the digital information capable of being processed by a microprocessor or CPU, unlike the digital audio information

The present invention shows as an additional feature the possibility of substantially offering a detailed information about the musical product that the user will listen by means of loudspeakers or earphones, without hand tampering nor opening of the wrappers or packing boxes.

A main object of embodiments of the present invention is to allow the high scale storage of digital audio information. In a preferred embodiment, the device of the invention offers a storage capacity of six (6) minutes of audio for each Mb of digital storage, with which it will be able to be stored, in the present state of the technique, approximately up to 400,000 (four hundred thousands) musical themes recorded on compact discs, cassettes, DVD and/or any other type of data present or future by which music is distributed, or up to 1,200,000 (a million two hundred thousands) minutes of information on offered commercial audio products, whatever type they are. These features may be expanded in the future, as long as computation hard disk manufacture technologies keep advancing.

The bar code of the music records or any other offered audio products that appear in the outer envelope of their original packing, allow for identifying the product in a unique and unmistakable way by means of well-known techniques. Nevertheless, the device of the present invention uses an application unknown until now in the art and which forms part of the present invention, through which the user will be able to listen to the complementary information about the product he is looking for, or the selected musical content, without the need to manipulate or open its envelope. The method and device of the present invention achieve this purpose with a first transformation of the data to be read and contained in the products or musical themes, into a computing format that interacts with control software developed specifically for performing these functions. The device of the invention is based on a conventional architecture of personal computer type (type PC - IBM(r) compatible, or of the family APPLE Mackintosh (r)), in which the conventional elements forming part of this equipment may be used and these have been numbered in detail when describing the figures.

As will be described in greater detail below, for the recovery of the previously stored data, the software detects the received inputs preferably by means of the bar codes presented in front of the device's bar code reader. By this, the program locates one piece of information related to this code on the device's hard disk and a second code in a volatile memory. The first piece of information is extracted from the hard disk's magnetic memory in a compressed musical program form and the second piece of information is extracted along with the identification of the stored musical theme from the volatile memory. The result of the combination of both pieces of information will be offered to the user through earphones or loudspeakers.

It is important to make it clear that in addition to the bar code, the input signal that identifies any musical product can be generated by a keyboard, a voice recogniser, a sensitive touch screen, or any other technique that allows for the generation of a search code signal. In a preferred embodiment, the audio data that is intended to be stored and restored consists of audio in general, and in a highly preferred embodiment it is music. For that particular embodiment, the device of the present invention has, in the front of its housing, an ornamental light device made up of colour LEDs that follow in audio-rhythmic form the musical rhythm of the themes that are being listened to.

In order to make the object of the invention clearer, the application has been illustrated with schematic figures, in one of its preferred embodiment modalities, which should be considered only as an example embodiment:

Figure 1 illustrates a superior plan view of the location of the internal elements of the device of the present invention.

Figure 2 shows a right lateral view of the device of the present invention.

Figure 3 shows a left lateral view of the device of the present invention.

Figure 4 illustrates a frontal and lateral view of the housing of the device of the present invention.

Figure 5 shows a schematic diagram in blocks of complete circuit system of the device of the present invention.

Figure 6 shows a schematic diagram in blocks of the security key of the arrangement of non-authorized security against copies of the present invention.

Figure 7 shows a schematic diagram in blocks of the sound processing in a synthesized sound generation unit from the previous art.

Figures 8A - 8D show the characteristic curves of the analog audio parameters and that are restored according to the method of the present invention.

Figure 9 shows a diagram in blocks of a generator of special audio effects, known in the present technique.

Figures 10A - 10E show a flow chart of the complete computation program that controls the operation of the device of the present invention.

In all the figures, the same reference numbers indicate same corresponding elements.

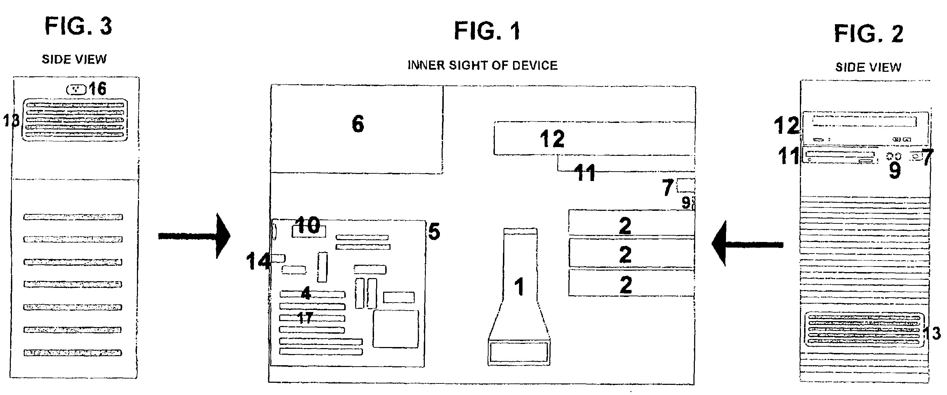

Corresponding to the illustrated elements, figure 1 shows a distribution scheme of the internal elements, and both sides where the earphones and/or loudspeakers are located, through which listening is made. The figure shows the bar code reader 1 used for reading the CD which contains audio information to be inputted to the device by any person in charge of the selling area. Another main feature of the reader is to recognize the CD that a potential buyer wishes to listen, without the need for opening the package of the disk. In the diagram the elements of magnetic storage 2 may be also seen, being preferably hard disks of great capacity, at present 20 GByte each or more, and of high speed access technology (preferably of 10 ms. access time at the most.)

Other elements shown in fig 1 are part of the device of the invention but they belong to the known state of personal computers technique. Such elements, as for e.g. the sound board 4, the motherboard 5, the power supply 6, the earphones/loudspeakers 8, the PROM Disk 10 chip, the ventilation grids 13, the modem connector 14, the Touch Screen 15 and the connector for video signal 17 are mentioned in the present application only for showing a total vision of the assembly.

Figure 2 shows a right lateral view of the device of the present invention, in which the ventilation grids 13 and the supply line connector 16 may be seen.

Figure 3 shows a left lateral view of the device of the present invention, in which the main switch 7, the female socket connector for audio entrance 9, the diskette reading unit 3 1/2 11 and the compact disk reading unit 12 may be seen.

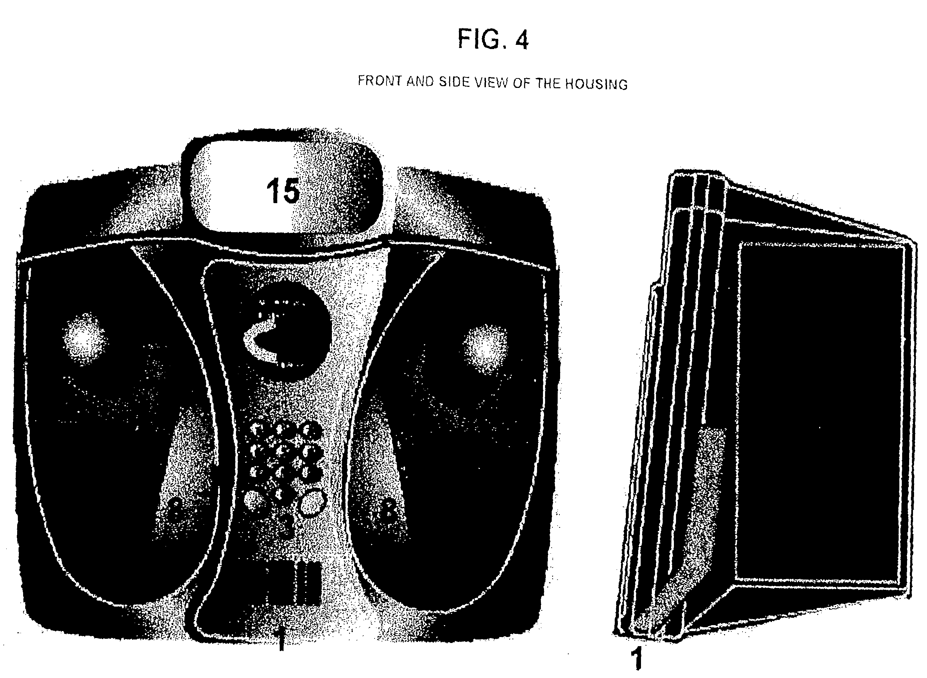

In figure 4 it may be seen the outside design of the housing corresponding to the device of the present invention, which was made for allowing a suitable arrangement of the used components. In the front of the housing a sticker with user instructions may also be seen; in its central part an audio-rhythmic VU -meter is observed, a selector keyboard or keypad and the entrance code device and a pair of earphones for the users.

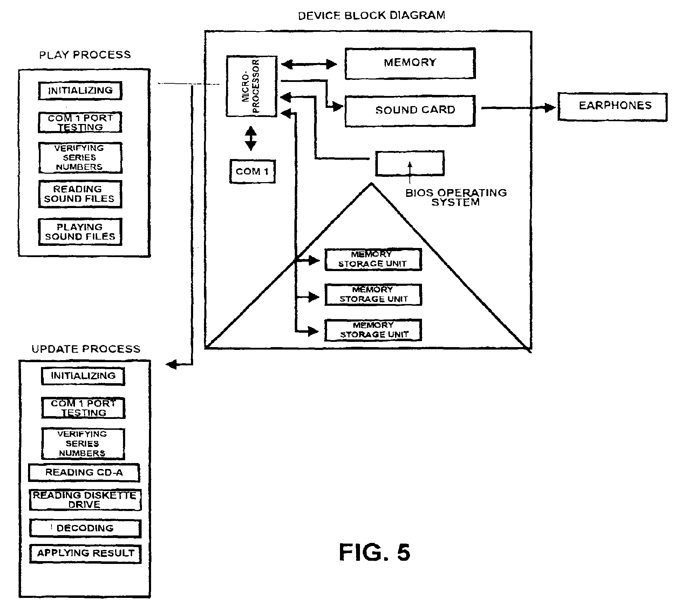

Figure 5 shows the schematic connection arrangement between the different elements that form the internal electronic circuit of the device and which correspond to a well-known personal computer architecture. Also, in the internal lower part of the right lateral side are: the 3 1/2 " diskette reading unit 11 and the CD ROM reading unit 12, through which the inputting of new folders (audio digital files corresponding to built-in CDs) is done, as well as the data extraction for preparing general statistics and technical control of the equipment; also the ventilation grids 13 in both sides may be seen.

The initial method of digital audio loading and the method for updating it in the device of the invention will be described, both differing in some aspects.

In general, in a brand new device, the inputting of the control program information and files is preferably carried out through the installation of a totally programmed hard disk including the control software, compressed files and the audio properties files. On the other hand, in a data update process of a used device, the incorporation of new musical data is made through the compact disk reader (CD) device which is supplied on the device, where a compact disk with the new folders is inserted, and only containing compressed "tracks" . The audio property files incorporated in the initial software load are not modified and will depend on the chosen compression format.

### Initial data load:

The first step of the storage method consists of the conversion to computing format and compression of the digital audio information contained in a commercial product, that may be a commercial compact disk (CD), a digital cassette, a digital video disk (DVD), etc. In order to simplify the description, a preferred embodiment based on the reading of commercial music compact discs will be described. This step begins with the transformation of the digital audio information contained in the compact disk (CD) to a digital computing format, which is carried out by means of any program converter of the ones existing in the market, and preferably installed in a computation equipment of the PC conventional type, thus obtaining files with extension type *.wav. Several conversion tests have been done with the following easily obtainable software : a) MP3 Software (r): b) Music Match Software (r): c) CD Extractor (r) Software. The result was in all cases the obtaining of high quality audio files but all of very broadly occupied memory. This is one of the main issues that the present invention overcomes.

As a result of the tests, it was concluded that any of these programs may be used to carry out the conversion to computing format. Nevertheless, if their own inverse process is applied, too big files are obtained; for that reason, when applying the playback method of the present invention, the compressed files can be reproduced with audio quality similar to the original one and, at the same time, occupying a very small space in magnetic memory.

In this stage, software is used for applying a digitalisation and compression process to the digital audio information. However, although this achieves the desired result by obtaining a reduction of the file, it shows an unacceptable audio quality under the high fidelity standards after being compressed, and therefore, cannot be used for its playback. This undesirable effect happens in all the processes of audio file compression and is a very well known problem in the art. Thus, the compression techniques known in the present state of the art can only reach a halfway solution between the achievement of a greater reduction of the file size and the degradation of the sound quality. In an application that is related the present to invention, this is a serious problem and requires a solution since the quality of the playback will determine the interest that the potential buyer will have in buying the product. The step of the method is carried out by passing from analog-digital format to digital-computing format, and reduces the files to a size which is decided by the operator at the time of generating the digitalisation. In other words, if the operator needs to obtain files of very small size, he will use the conversion process for generating very low quality files. The relation size-quality is always maintained and, the higher the quality needed, the greater the space occupied by the files in the magnetic memory.

The process of compression and separating and storing the audio properties in the complementary database will be next described in detail.
This process is repeated for each one of the folders (complete musical products) taking part in the process of load and update, storing them in a compact disk that will act as a master disk and recording on a diskette the database of the properties extracted from the tracks belonging to those folders. During the playback process, only part of this method will be made in an inverse form for listening to the audio with a maximum sound quality, as it will be described in detail in the paragraph that explains the playback method.

The compression of the obtained files is done by actually defining in the compression software the amount of minutes that the tracks (themes or "cuts") will have of final duration after being compressed. Since the final goal of these files is to use them in this particular application, it is not necessary that the theme is included in complete form, but only selecting the best musical from a minute to a minute and a half of duration of each theme, being this result what will be included as a sample in the device software.

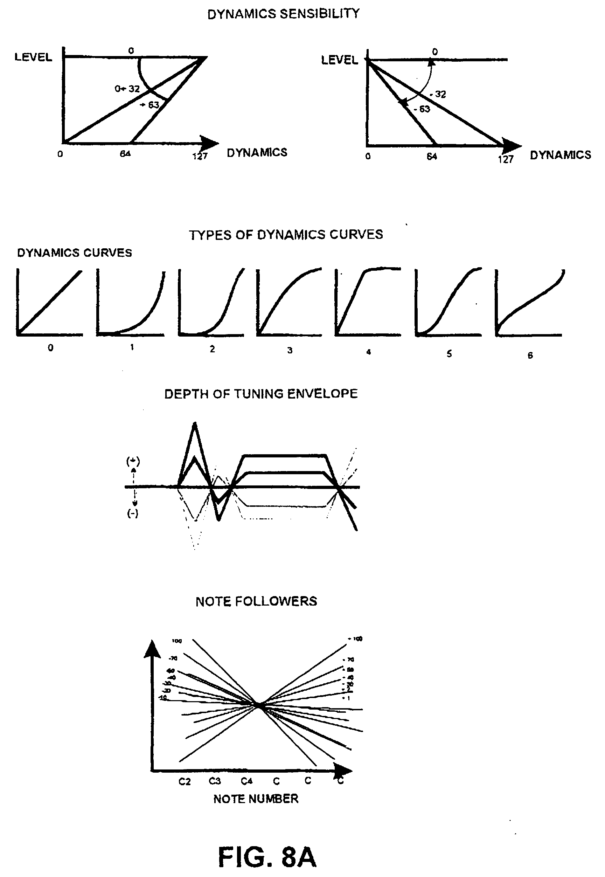

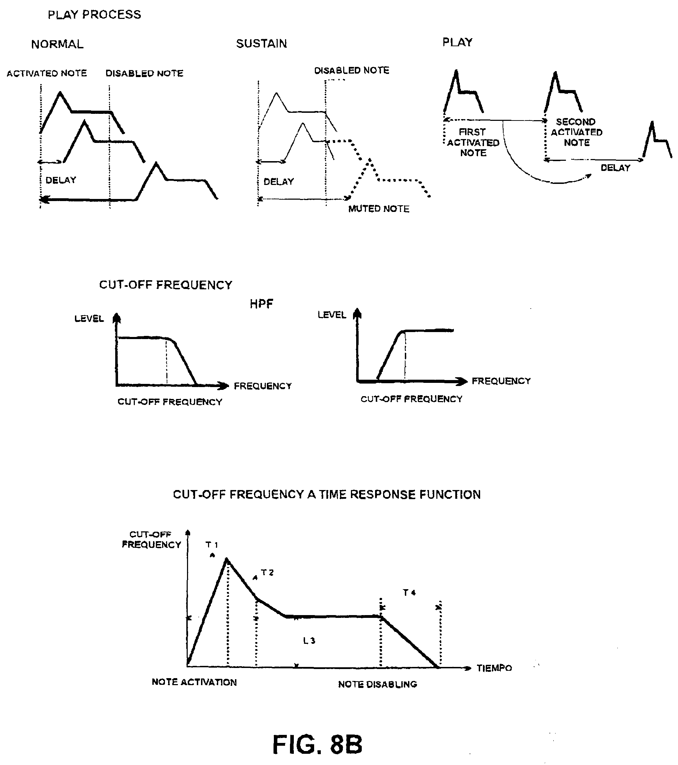

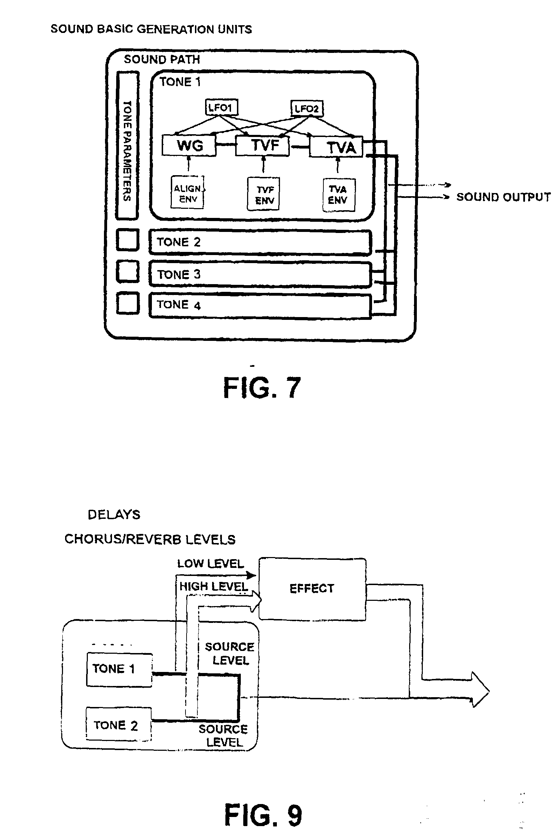

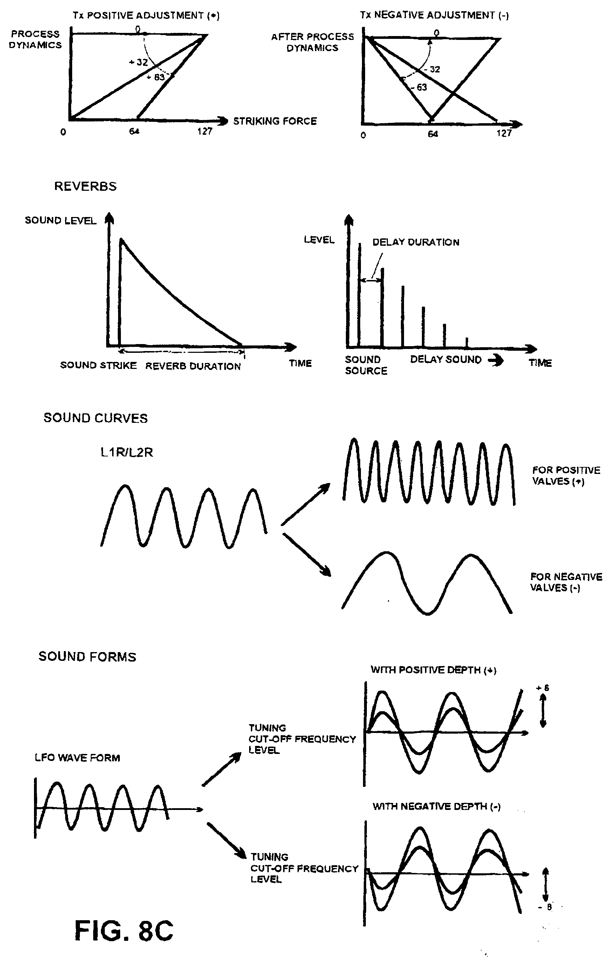

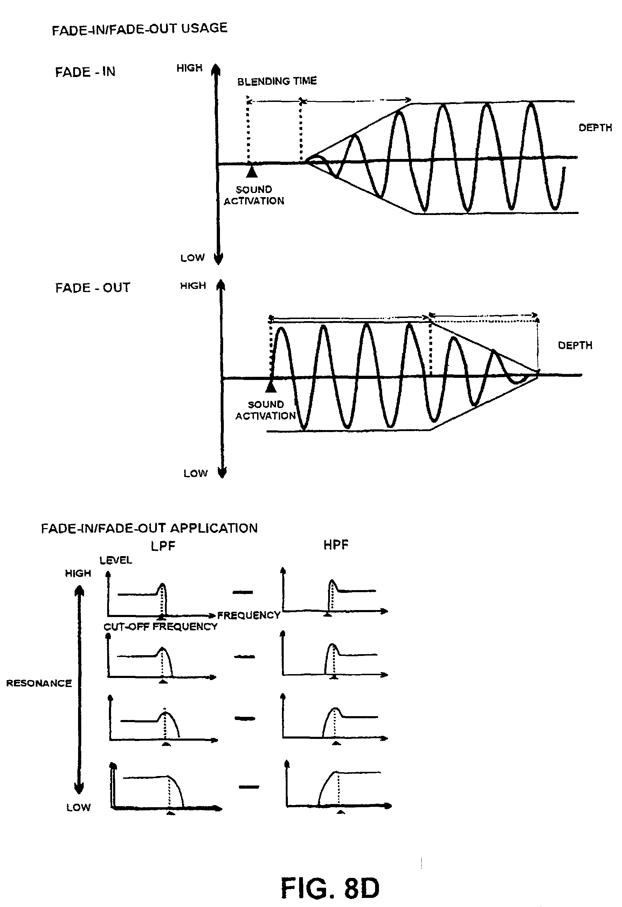

Next, the software designed specifically for the invention, carries out the second step of the method in the same previously mentioned computer and is based on the separation of the audio properties, by generating a file of audio properties which will allow to optimise the magnetic storage resource with a performance that surpasses all the techniques known in the art. This step is based on the knowledge of the sound waves and the psycho-acoustic reception of the human being. The audio signals are in general complex and therefore require a detailed analysis to be able to be processed. For achieving this, numerous physical and psycho-acoustic parameters are defined as taking part in the conversion of the signal. The parameters more known in the physics of the pure sounds are the frequency and the amplitude. Nevertheless, and since the signals to be processed will be composite signals, that means that they are not pure sinusoidal tones, they should be mathematically treated in order to allow prediction in the results of a compression. Concerning the frequencies range, in general the audio signals can cover from approximately 1Hz to 30 KHz (above this value it may be considered ultrasound band). However, based on the frequency band to which the average human ear statistically responds, the considered band will be preferably 20 Hz to 20 KHz. As far as the amplitude is concerned, although the dynamic range of the human ear is remarkably wide (0 dB to 130 dB, referred to 2 10 -4 bar) and very variable with the frequency due to well-known psycho-acoustic processes, the dynamic range will be restricted at the usual levels of the commercial recordings. A strict mathematical analysis would require decomposing the signals in a Fourier series into their basic components of pure sinusoidal frequencies, for later applying functions of linear result. In order to avoid the use of these complex techniques, the audio engineering has used other parameters that define the dynamic behaviour of the audio signals and, in particular of music allowing in very graphical way the processing of the signals for modifying its qualities. Some of the most used parameters or properties in the audio digital processing in recording effects are those as shown in the figures 8A, 8B and 8C: - Dynamics Sensitivity: change of the response level as a function of the played note range: i.e.: the higher the note's pitch, the higher the intensity; the lower the note's pitch, the lower the intensity level. Also, as this level moves away from the 0 value, greater will be the change, either by increase or reduction, for positive values as well as negative.
- Depth of tuning envelope: a cut-out that mostly tends to a positive value, the envelope depth will be greater and the tuning goes up; if the value is negative the envelope depth will be smaller and the tuning goes down. As the values get further away from zero the tuning will change more.
- Cut-off frequency: determining the cut-off frequency implies reaching parameters of acceptable quality (taking in account that the device will be a musical tester), settling the pass limit for low and high pitch notes without causing distortion in their listening quality.
- Cut-off frequency as a time function: this parameter establishes the compression limit to be applied, so that during the theme playback, a lack of quality brightness may not heard.
- Wave Generator (WG): it generates the Wave in Original form and controls it's tuning.
- Time Varying Filter (TVF): It determines the timbrical qualities of the sound.
- Time Varying Amplifier (TVA): It controls the volume of the sound.
- Envelope Generator (ENV): It fits the envelope levels to be applied.
- LFO: It adds expression to the sound supplying movement and vibration to the waveform.
- Reverb: It simulates the reflected sounds contributing to an effect of distance and amplitude.
- Fade In - Fade Out: It is used in the ending of sounds, for establishing fixed parameters of times. They cause the progressive appearance or extinguish of the sounds.

All these parameters are well known by sound engineers and by those who work with computer music recording software and, therefore, they will not be described in greater detail in the present document and they will not be analysed from a mathematical point of view since this is beyond its scope.

When a compact disk is digitised for converting it to computing format by means of known commercially used software, a series of parameters are loaded, for example the quality of the compressed file defined in "8 bit MONO ", through its optimisation tools. This is the data from which the prediction of the quality of the files recorded in the device may start, since all the sounds contained in it will be recorded under the same format and with the same parameters. These files are recorded in the computer hard disk just as it is done with any other kind of file and, in the playback method carried out by the device of the present invention, when submitting the files to the process of the invention, a quality similar to the original one will be obtained, with no need for using the inverse process of the compression software.

The third step of the storage method changes according to whether the process of initial load is carried out or whether an update of the existing musical data in the playback device is done.

According to what was said in a previous paragraph, in a first variation of the third step of the storage method the initial load of the control software is carried out, along with an initial load of audio data in form of compressed files and properties files, done by transferring all the information from the personal computer hard disk to a removable hard disk, which is installed on the device, making it ready to work in independently.

### Data Update:

In the update process, when the equipment is powered up, the device carries out a second embodiment of the third step of the storage method. In a first sub-step it controls that the serial numbers of the components agree with the ones that were entered for the first time during the equipment assembly for verifying that they are the original components. If differences arise from this comparison, it is inferred that the device is a non-authorized copy, and the software sends the order for the total erasure ("delete") of the resident programs in memory, being the all the operation of the device completely disabled. After that, the commercial products are placed in each device, the former being a digital audio cassette tape, digital video tape, CD or DVD, etc., according to what was said in a previous paragraph. In a highly preferred embodiment a compact disk is used (CD). In this step, along with the compact disk a diskette is also placed in its corresponding drive.

Next a second sub-step of the data load is carried out, in which the device is started in " update " form instead of " playback ". This diskette contains the operating system files and start-up routines that will allow the device to make this operation. During the start-up function ("booting " in the computation slang) the software placed in the diskette takes the control of the operation.

The storage method then carries out the fourth step making the encryption or coding of the tracks of the folders, which consists of taking each one of them and modifying its data structure by codes belonging to the ASCII Table of characters, following an algorithm that can be variable, being these able to be restored to their original version when the information load or update to the hard disk is made, i.e. each track is decoded when each code of Table ASCII is replaced by its corresponding original value, applying the inverse formula of the encrypted algorithm used for encoding these files.

The fifth step of the storage method consists of reading a folder placed in the compact disk and the verification of its non-existence in the internal magnetic means of the device (hard disk). In this step, the folder corresponding to the number within this internal magnetic means is created and all tracks in the folder are dumped or copied, from the compact disk to the magnetic means, while decoding or decrypting the tracks before being dumped into the hard disk.

In this way the third (second variation) to the fifth steps are repeated until the transfer of all the existing folders in the compact disk to magnetic means of internal storage of the device is done. Next, when the copy of all the folders that take part in the initial load or the update of the existing information is ended, the software of the diskette will fulfil the sixth step of the method, in which it will read the existing free space in magnetic means and the number of playback processes made for each folder, for recording in diskettes important data that may be useful for remote technical controlling and development of statistics on playback processes made by the users, according to the alternative embodiment already described in this document.

As generally mentioned in previous paragraphs, to overcome the problem of audio quality degrading, the device of the present invention takes into account the audio quality parameters and stores these during the process of compression in a complementary database, which is finally loaded in its internal magnetic memory for having it available during the playback process.

In future, when communication lines may offer better transmission performances with broader bandwidths, the update may be carried out via modem by direct connection of the equipment with the telephone lines through a connector.

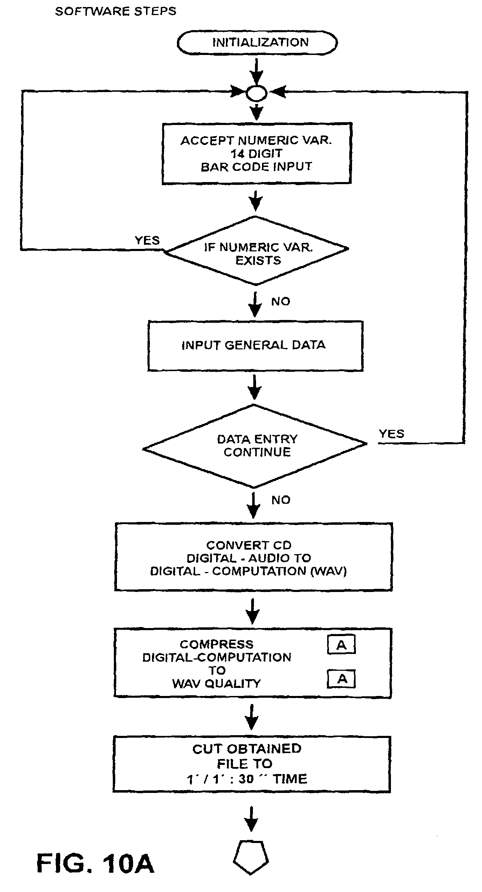

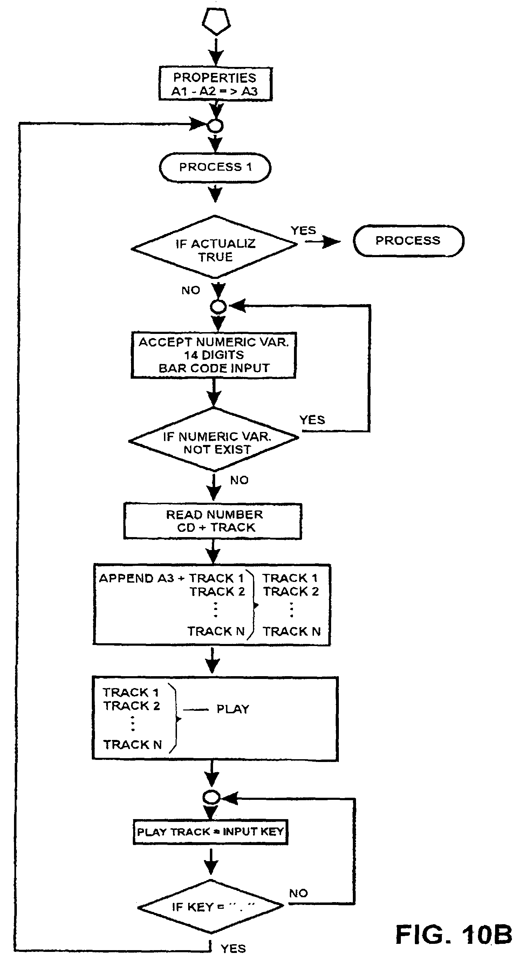

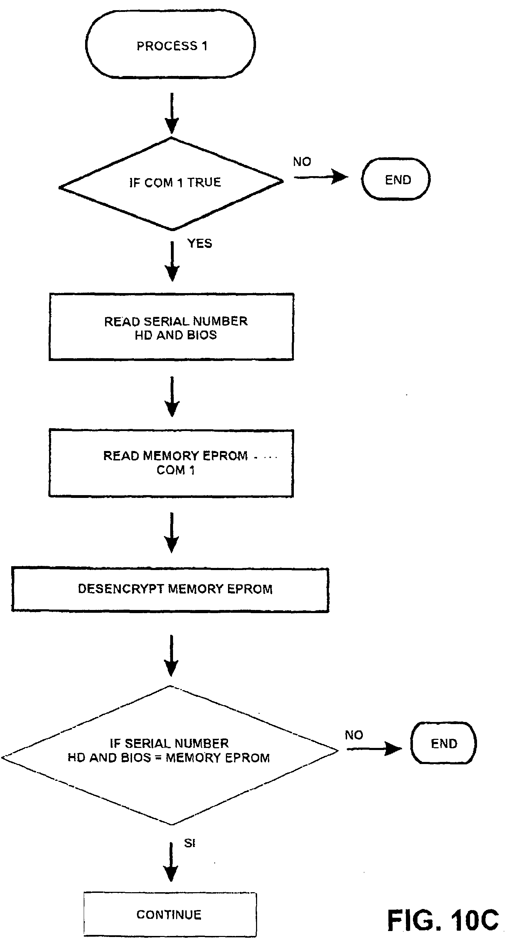

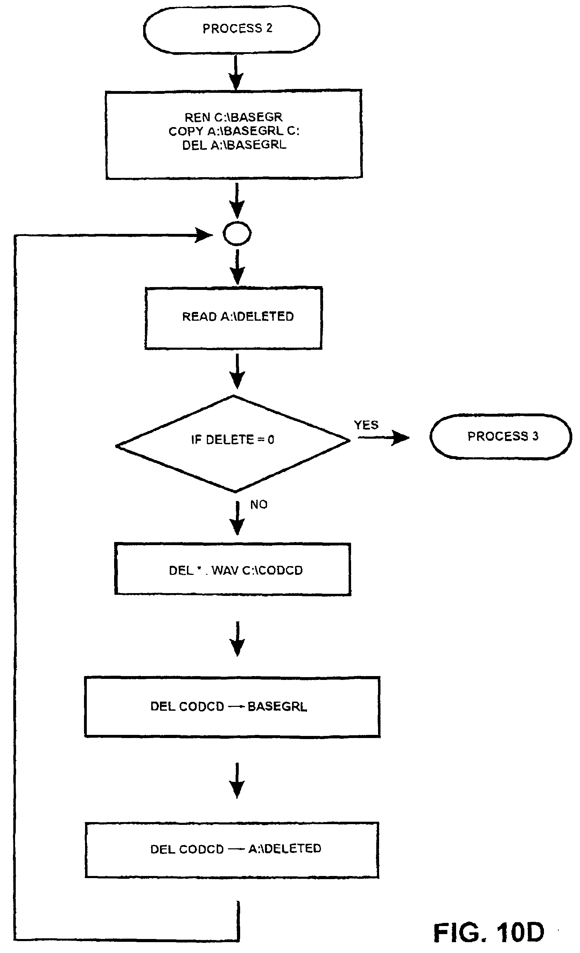

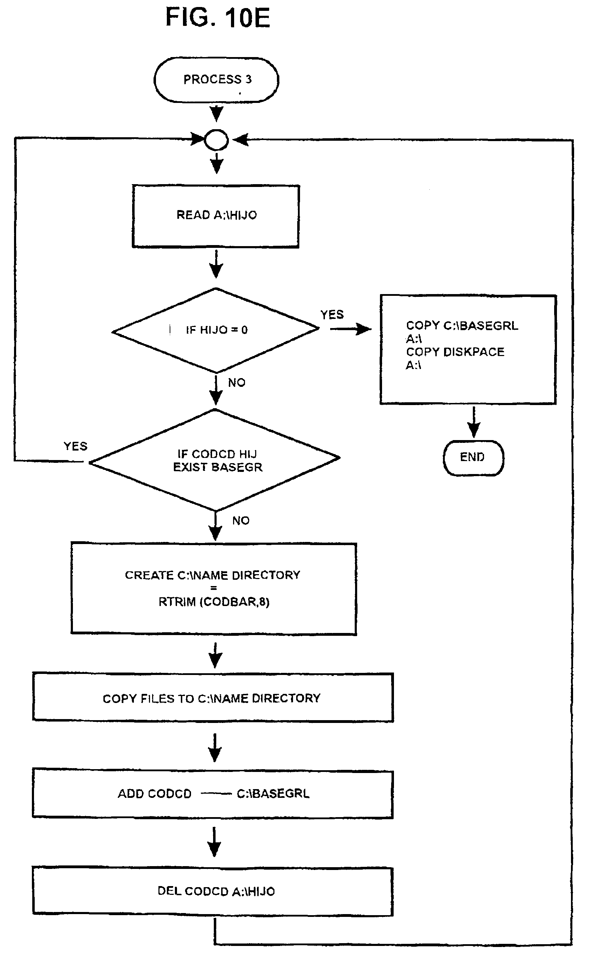

Block diagrams in figures 10A - 10E briefly describe the operation steps and, in a first embodiment, the control software of the device of the invention is stored in one of the magnetic means (hard disk). In another preferred embodiment, the control software is contained in a PromDisk Bios CHIP (that replaces the original Bios, or base operating system of the motherboard and places itself in its same slot).

In general, the method of selection and playback begins with the reading of the product code, preferably by means of a bar code reader. Alternatively, the user will be able to load this data manually through an alternative element, e.g. the numeric keypad or keyboard. This step will allow the selection of the folder stored in the hard disk, and the audio property file, both corresponding to the audio data contained in the CD that the user has chosen.

Next the device will simultaneously emit the audio of both files through the multi-channel output audio card with which the user will hear the selected data with quality nearly equal to the original one.

The first step of the playback method is the automatic load of the control software in the equipment memory (located in the mentioned motherboard 5) when the device is powered up, and constant control operation on hold is made from that moment onwards, being only interrupted when the device detects that it is being operated by a user. The element for identifying the input code, preferably a bar code reader, allows to carry out the second step of the playback method and this step is part of another object of the present invention that is based on the inputting of the commercial product identification to the control software through a bar code reader. For doing so, the bar code label that is externally stuck to the packing of different products (musical CDs, cassettes, DVD, etc.) is read. This function is manually carried out by the user in the usual way, and it is carried out by placing the bar label in front of the reader in a conventional way and is controlled by means of the software that is stored in one of hard disks 2 contained in the device. This allows the control software to know the exact location of the compressed file and of the property file in the hard disk, to let them be ready for analog outputting, being this combination of functions also a new feature. In an alternative embodiment, considering the possible lack of bar code label on the product packing, this function may be made in manual form through the keyboard. Next, the method carries out the step of finding the compressed files corresponding to the folders with the digitised information of each product (CD or equivalent) in one or both hard disks, in particular the one that has previously been converted to computational format.

Continuing with the playback method, the third step of this method consists of the manual selection of the track or specific musical and contained in the selected CD, through numeric keypad or a keyboard 3.

Once this software locates the detected code, the fourth step of the playback method consists of loading all the tracks that are grouped under this code (called " tracks " in the musical slang and they talk about the individual musical themes form the CD at issue) in the volatile memory of the device, that is, all the musical themes of a particular CD are loaded. The use of the equipment by a potential buyer is detected when a change of state occurs in one or more of the signal entrance elements used in the invention as built, passing from "autoscan or autodetection" mode to "active" mode. It has been said that these elements can optionally be: bar code reader, keyboard or keypad, display with sensitive screen or voice recogniser or others. In order to describe with more detail this step it is pointed out that, from the moment in which the input to memory of a number non-greater than 24 digits takes place (by any of the inputting means described in the previous paragraph), a search in the elements of the magnetic storage of the invention is started, for locating the folder previously stored in this magnetic means, when its number matches with the entered number. If the number is not found, the software will produce a pre-recorded message that will be sent to the earphones and/or external loudspeakers by means of the sound board, indicating the non-existence of a stored folder under the entered number. If the number is found, it will start to read all tracks, or musical themes that are stored under the number of the corresponding folder, transferring them automatically to the memory of the equipment, with the procedure described next:

From that moment on, the fifth step is carried out, which allows obtaining an audio playback of a sound quality that distinguishes the present invention from any known technique. This step of the playback method consists of taking the first track, looking for it by folder number and track number in the audio property complementary database, which is also stored in magnetic means of the device and that forming part of the program software of the device.

Next, in the sixth step of the playback method the values of the properties or parameters of audio quality that the file had lost during the compression process (for obtaining a file of reduced size) are read from the complementary database, during the load of the musical information in the device. The property audio file was obtained by comparison of the original state and the present state of the compressed audio file and responds to a general level of property restoring that is a function of the compression degree used in the compression method.

The seventh step of the playback method consists of copying the restored final file in the volatile memory of the device. Steps 2 to 7 are repeated until detecting that there are not any more tracks available for reading in this folder. In an eighth step, the control program of the device generates the audible result of the audio properties restored by means of the use of " generators " or "shapers " of all these properties (envelope, sustain, etc.) that are contained in the program, in the same way in which the sound engineers manage to modify the original sound that is recorded in a digital recording session carried out with any of the commercial programs that are used for these uses (for ex. Performer(r), Symphony(r), etc.) For the experts in the art of audio recordings using a personal computer, is known the technique of modifying the properties that may obtained by means of accessory tools of these programs that appear in form of complementary windows and they also know that the use of these windows has as consequence an enormous increase of consumed memory. For that reason, the principle of the present invention is based on separating these properties with the purpose of saving space of magnetic memory, to later restore them when playing back. It was said in the previous paragraph that the degree of intensity of the restored properties will depend on the format in which the audio file will be compressed and the audio file quality, which is desired to be restored to it. The quality of the compressed and restored file was defined in the parameters that are selected in the accessory tool of the compression software (for ex. a high quality file of 24 bits stereo is compressed to a file of low monaural quality of 8 bits). In fig 7 a scheme of the basic units of sound is observed as well as the form of the basic structure for the generation and later modification of a digital audio sound of any commercial music generation software, as said, known well by the experts in the art. In the control software a module of generation of all the audio properties has been included, following this concept, being in charge of generating corresponding audio to the properties that will be restored..

The properties file is a routine that is incorporated in the source program of the control program of the device and it is generated in automatic form from a series of parameters that are set to the corresponding generating compression program. This compression-generating program is used in independent form and is not included in the control program (executable) of the device, but only the file generated by it is used. The programming language used to write the control program (executable) is Assembler but there are also some C language libraries incorporated therein. This means that the audio properties file is a separated file that is later incorporated to the control program (executable); for that reason all the audio stored information inside the device must be compressed to the same final format (for ex. 8 monaural bits); if not, it would be necessary to include within the executable program a properties file for each external compression format type used in the sounds folders, which would be cumbersome and uncomfortable for the person in charge of updating the device. For this reason the program is also compiled along with the properties library of and, next, the folders with the titles (musical themes) or CDs in computational format are incorporated, all with the same pattern of final compression.

In a ninth step of the playback method, the audio will be transferred by means of the board of sound 4 to the earphones or external loudspeakers 8. The sound card is connected to the motherboard 5, which is fed by the power source 6, and driven by the switch 7. The earphones or loudspeakers are connected to two female sockets 9 and the signal also will be seen in an audio-rhythmic VU-meter made with round-shaped LEDs with an assembly card which is not shown. At this point all tracks belonging to the stored folder, being recorded in the magnetic means and whose number was asked for by the operator, are loaded in volatile memory and together with its restored original parameters.

In the device, the output of sound board 8 are used for playing back compressed audio and complementary audio parameters simultaneously, working just as "GMIDI" technology instrument (General Interfaces Norm of Digital Musical instruments) do, where different tracks may be separately recorded and with a different instrument each, for being able to be later played back simultaneously, thus forming an orchestra. The compressed low quality file recorded in computational format is out-putted through one channel output, and the properties file which is incorporated in the control program (executable) is out-putted through the other channel.

In a tenth step of the playback method, the counter following the folder in use in the complementary base of parameters is increased on one, for being able of counting the accesses to it in, in order to prepare statistics regarding the listening processes. At this the moment playback of the first track of the list is carried out so that the user knows the software operation has ended, and for indicating him that the equipment is available to be used again.

In this way the equipment will respond to the numerical inputs that are made, carrying out the playback process of the number of track that has been detected as an input. It is important to point out that, if a folder only contains 20 tracks and the operator asks for number 21, the last entered digit will be taken as valid and, therefore, it will playback track number 1. When clearing the memory is desired and the tracks have to erased and re-established (they are only deleted from the volatile memory, not from magnetic means), it may be enough to press the "Stop "denominated key, which will be interpreted by software as a "clear memory" command or total blanking of the memory. Since the device is switched on and off by means of a mains switch not requiring of any previous process for its use, it is necessary to carry out a checking routine during the starting or "booting" sequence of the terminal, consisting of erasing ("delete") the database where the parameters for the recovery of sonorous files properties are kept, and copying ("Copy") an identical base of backup parameters, which is kept in permanent form within magnetic means with another name. The date base of backup parameters will replace the database of parameters that was erased with the " delete" command, recording it with its same name. This will avoid that a device disconnection, with the files loaded in memory may cause the total loss of the main "engine" database for the operation of the equipment.

The device is controlled by means of a computing program developed specifically for carrying out the steps of the described method that is part of the present invention. The source program is developed by subroutines for which several programming tools belonging to several languages have been used. In general the used editors and compilers are the respective ones of each language. They are: Visual C; Visual BASIC; Clipper; Assembler Language; Authorware.

The program fulfils the following steps:
- Checks the security key for identifying illegal copy
- Reads Entered Bar code.
- It checks if it belongs to an existing title in the Listening device.
- If exists, it reads the tracks belonging to the title.
- When required by the operator, it waits for the pressing of a track number.
- It sends the selected track to the sound card through a channel and sends the properties through the other channels for improving the sounds to be listened to.
- It records the listened title in a database for preparing statistics files.
- When the pressing of the Stop key is detected, it returns to step a) and starts all the cycle again.

In order to protect the device and software against non-authorized copies, a security system and method have been designed. In order to carry out its function, the system consists of different security levels and comprises software as well as hardware.

### First level of security:

### 1) CLIENT SECURITY:

Any software execution (recopying, updates, etc.) will be enabled by the recognition of the authentication code of the corresponding disk and BIOS chip of the equipment, assigned during the process of compilation, previous to the load of the program.

A unique code (secret) will also be assigned to the Client (user) to be used for generating which the different necessary passwords for the different enabling processes in the program. These codes will be generated by means of different fixed encryption patterns:
- Execution password
- Database update password
- Credit password for enabling new Updates (12).

### Second level of security

### EXECUTION SECURITY - BLOCKING KEY (dongle)

Each device to be installed in selling stores is equipped with an electronic module called security or blocking key or blocking dongle containing a protection circuit, internally connected to the COM1. This module is used for maintaining a permanent dialogue with the software, being equipped with a RISC microprocessor and non-volatile memory and a circuit system that will be described in detail in a following paragraph.

This security key will contain in its memory the Authorization password of the execution of the main program. The Authorization password is used for accessing the Update modality of the database, the different passwords for update credits and the updates in-course counter.

Whenever the execution of the main program starts, the software requests from the security key, the authorization for starting to execute its routines by sending the Execution password to the device and waiting for the authorization that the electronic circuit of the device gives back to him, previously processed. If there is no answer, or it is incorrect, the program stops.

The security key/ dongle is designed for:
- Allowing the owner of each equipment to use of software without limit but always executing (running) the original software bought with each device.
- Allowing the owner of each device to update its database a limited amount of times (amount guaranteed by its manufacturer) being able to renew this amount with the acquisition of a new credit.
- Preventing the database from being transferred between devices i.e. only operating on one device at a time.
- Protecting the software from being copied or database changing.
- Helping the follow-up tasks of the sold units.
- Personalizing the devices according to the client, avoiding in this way that the fraud in a device propagates to the rest of the sold units.

### Security Method of the Security Key

Next, a method will be described for implementing security precautions against illegal uses of the device or the control software, or non-authorized copies thereof.
a) A module is directly connected to the COM 1 connector of the motherboard. This module will consist of a RISC processor which will interact with EEPROM memory where the event counter and the in-course credit index will be stored, and with a "Flash" Memory type where the Client Code, Execution password, Update password and Credits Table will be stored.
b) The serial numbers of the hard disk and BIOS memory of the equipment will be placed inside the programs, plus another password that will correspond to the client. All these parameters will be encrypted, and the decrypter placed inside the programs will be in charge of translating them to a comprehensible form, so that it will be able to compare these codes with the ones that the equipment really contains.
c) If the comparison results in mismatches, the system it will not be able to continue running, understanding that it is only a copy of the software, if this is not the case it will allow the use of the equipment in unrestricted form.
d) When it is desired to incorporate new folders with sounds, the checking routine that controls the usage of the protection module and the corresponding comparisons of the encrypted passwords, will be made in the same way as explained in points a), b) and c); but also it will also check the number of credits or events that have been consumed with the updates already made.

That is to say, each user will be allowed to carry out a certain number of updates, the counter will be initially set to a number, and it will increase by each process made.
e) If the number of allowed updates (indicated within the existing Credit Table in FLASH type Memory) is identical to the in-course credits index indicated in EEPROM memory, the user will have to ask for a new update password which, if coinciding with the existing one in the Credit Table, will generate a new amount of allowed updates, repeating all the process again.

### Circuit description of the security key

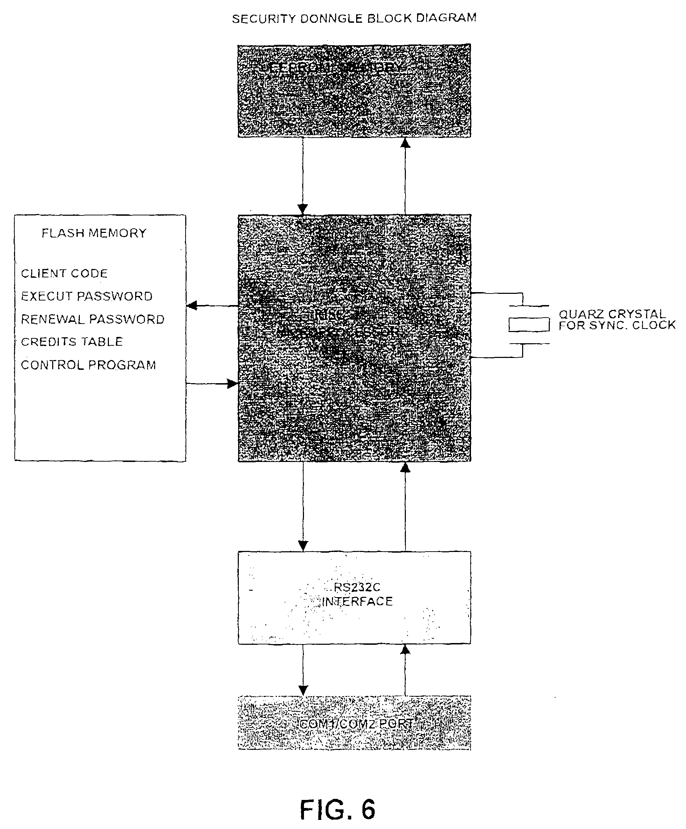

According to figure 6, the security or blocking key/dongle contains a RISC type microprocessor 61, an EEPROM memory 62 (non-volatile memory, erasable by electrical means without extracting it from the socket but only in blocks or totally re-programmable), a "FLASH" type memory 63 (similar to the EEPROM, but total or partially re-programmable with no need of extracting it from the socket), an interface of communications RS 232C 64 for connecting to a serial output of the device 65 and a crystal quartz 66.

The microprocessor is in charge of the execution functions of the program and is synchronized by means of the crystal quartz. The counter of events and the index of credit in course will be preferably stored in EEPROM memory. The client codes, the execution password, the update password, the Credit Table and the control program will be preferably stored in the "Flash" type memory. Finally, the serial interface will be in charge of sending the data from and towards the serial output ports COM1 or COM2 of the device.

### Third level of security.

### UPDATE SECURITY.

Each device is supplied with a fixed amount of update processes of its database. This amount is pre-recorded in the security key/dongle.

Each time an update in the device is carried out, the software requests for authorization to the security key, in the same way as it is done for the execution, by means of the Update password. Once the password is recognized, the security key subtracts a unit from the update counter and returns the modified password for allowing the process.

If the counter is equal to zero, the unit does not return any value, the program stops running, it sends a message to the client describing the origin of the halt and requests from him a new key.

If the client obtains a new credit from his supplier, he will provide the client with the new password so that the unit sets its internal counter back to a new value.

The Update password continues being the same and, once the counter is enabled again, the process repeats itself.

### Fourth level of security

### CREDIT EXTENSION SECURITY

Each device has in its corresponding protection unit, a table containing the different enabling codes of new credits for updating its database. This table is generated from a series of predetermined algorithms and on the basis of the client code.

When the update amount sets the update counter to zero, the client will have to ask for a new access password for resetting the counter. Once the acquired credit is used, the enabling password is disabled in the security key and a new security key will be required if he wishes to continue updating his database.

## Claims

1. A method for storing digital audio in magnetic memory, from a commercial digital audio product having an identification code on its packing, carried out in a digital audio storage, selection and playback device containing microprocessor based circuit components, an element for inputting identification codes, commercial digital audio product reader and a diskette drive, said method comprising a step A1) of converting to computing format and compressing digital audio files by means of a software in a separate equipment, resulting from this conversion and compression a loss of audio properties which result in a loss of audio quality when submitting it to an inverse process of sound playback, this method of storage characterized by further carrying out the following steps:
A2) generation of an digital audio file of audio properties, being function of the selected compression format, and
A3) loading of said properties file and said compressed file in at least one element of magnetic memory of said device,
being said digital audio properties file able to recover said lost audio properties in simultaneous playback of analog audio of said properties file and said compressed file.

2. The method according to claim1, characterized by said step A3) of loading said properties file and said compressed file being stored in a removable hard disk and together with a copy of the control software, carrying out an initial data transference and control automation for said device.

3. The method according to claim 1, characterized by said step A3) of loading said properties file and said compressed file being stored in a compact disk, and together with a software for start-up and basic functions stored in a diskette, carrying out an audio information data update for said device.

4. The method according to claim 3, characterized by the step A3) of loading said files being formed by the following sub-steps:
A3-1) powering of said device with line voltage and automatic verification of the serial number of the circuit components of said digital audio play back device;
A3-2) placing of said file compact disk selected in said of audio commercial products reader and placing of a computation diskette in said diskette drive;
A3-3) starting up of the circuit of said device and reading of the information contained in the compact disk by means of the corresponding reader, which contains the sound folders to be updated in the hard disk, that are codified or encrypted according to an algorithm that can be variable.

5. The method according to claim 3, characterized by carrying out after the step A3) of loading said files the steps of:
A4) booting with control program contained in said diskette for commanding the update process;
A5) reading of a folder placed in the compact disk, verifying its non-existence in the device hard disk, further creation of it in said hard disk, carrying out de-encryption process and recording of the themes or tracks within the created folder; and
A6) reading of the free space of the hard disk and reading of the number of consultations made by said control software for said folder

6. The method according to claim 3, characterized by carrying out, in the sub-step A3-1) of powering up and verifying, a comparison between the serial numbers of the components with respect to the numbers entered initially in factory and, if at least one discrepancy is detected, creation of an order for the total erasure of the resident programs in memory by the control software.

7. The method according to any of the preceding claims, characterized by said A1 step) of conversion and compression of the files generating file extensions with a ∗. waw format.

8. The method according to any of the preceding claims, characterized by said A2 step) of generation of said properties file being made on the basis of a sampling of an audio section from 1 to 1.5 minutes of duration.

9. The method according to any of the preceding claims, characterized by said audio properties being selected from a group formed by the following parameters: dynamics sensitivity, tuning envelope depth, cut-off frequency, cut-off frequency as a function of time, wave generator (WG), time variant filter (TVF), envelope generator (ENV), LFO and reverb, "fade-in and fade- out".

10. The method according to any of the preceding claims, characterized by said A1 step) of conversion and compression of the files generating files of preferably 8 bits monaural format.

11. The method according to claim 4, characterized in that the A4 step) of codification of the tracks belonging to the folders consists of modifying its data structure by codes belonging to the ASCII table of characters, by means of the application of an algorithm that can be variable, recording the mentioned folders in the update compact disk after being encrypted, and downloading them to the hard disk of the device to be updated, previous to the application of the corresponding decryption process.

12. The method according to any of the preceding claims, characterized by said magnetic memory element being preferably a hard disk.

13. The method according to claim 5, characterized by generating statistical data about said transactions with the data obtained in step A6) of reading of the free space of the hard disk and reading of the number of consultations.

14. The method according to any of the preceding claims, characterized by said commercial product being selected from a group formed by commercial music compact discs (CD), commercial digital audiocassettes or commercial digital video discs (DVD).

15. The method according to any of the preceding claims, characterized by said element of identification code input being selected from a group formed by a keyboard, a screen sensible to the tact or a voice recogniser.

16. A method of digital audio selection in magnetic memory, to be used in the method for storing digital audio according to any of claims 3 to 15, by means of which a user reproduces a commercial audio product presenting a bar code on its packing, said product being stored within said magnetic memory in form of a pair of files: a folder compressed format computing file and an audio properties file; said playback being carried out by means of a device that contains a control software and contains a bar code reader, characterized in that the locating of said pair of files is made by said control software by means of the obtained data through the reading of said bar code by means of said bar code reader.

17. A method of digital audio playback in magnetic memory, to be applied as inverse method of the method according to any of claims 1 to 16, carried out by means of said audio playback device that also contains at least one element for identification code reading and a numeric keypad or a keyboard, for playback of said commercial audio product, in which an element of magnetic memory at least contains a file in computing format and compressed according to selected format and corresponding to each one of the contained tracks or musical themes in said commercial product, characterized by said magnetic memory at least containing one audio properties file corresponding to the mentioned compression format and said method carrying out the steps of:
B8) digital audio generation of the audio properties from the digital properties file and generation of the digital audio from the compressed file and
B9) simultaneous audio transmission of both files through the sound board in an analog format.

18. The method according to claim 17, characterized in that, previous to the B8 steps) of audio generation and B9) of simultaneous audio transmission, the following steps are further carried out:
B1 ) powering of the microprocessor based circuit and circuit verification of the device;
B2) inputting of the commercial product identification through the identification code input element and localizing of the compressed files and the audio properties files corresponding to the audio folders;
B3) manual selection of the track or musical theme corresponding to the selected themes by means of the numeric keypad or a keyboard;
B4) loading of the compressed file of each track or musical theme in a sector of said volatile memory element of said device;
B5) loading of the audio properties file of each track or musical in another sector of said volatile memory element of said device;
B6) reading of the audio properties file of each track;
B7) copying of the final file formed by the compressed file and copying of the properties file in volatile memory;
and, after the step B8) of audio generation and B9) of simultaneous audio outputting, the following step are carried out:
B10) increasing the folder counter for computing the accesses to it.

19. The method according to claim 17 or 18, characterized by said commercial product being selected from a group formed by commercial a musical compact disk (CD), a commercial digital audiocassette or a digital videodisc (DVD).

20. The method according to any of claims 17 to 19, characterized by said code-input element being selected of a group formed by a keypad or a keyboard, a sensible touch screen and a voice recogniser.

21. The method according to any of claims 17 to 20, characterized by said audio properties being selected of a group formed by the following parameters: dynamics sensitivity, tuning envelope depth, cut-off frequency, cut-off frequency as a function of time, wave generator (WG), time variant filter (TVF), envelope generator (ENV), LFO and reverb, "fade-in and fade- out".

22. The method according to any of claims 17 to 20, characterized by the reproduced audio quality being preferably equivalent to a 24 bits stereo quality.

23. The method according to any of claims 17 to 22, characterized by the simultaneous audio transmission one of the compressed file and the file of restored properties being carried out by means of a sound card of at least two channels for audio output.

24. A storage, selection, and playback device of digital audio in magnetic memory, for carrying out the method of any preceding claim, said device comprising microprocessor based circuit components, a BIOS chip mounted on a motherboard, an identification code input element, a commercial digital audio product reader, a diskette drive, at least one magnetic memory element, at least one volatile memory element, a sound card, a power supply, at least one element of sound playback, a sensible touch screen, a numeric keypad or a keyboard, and a control software, characterized by the signal generated by said identification code input element being able to activate the control software for selecting a stored compressed audio file and an audio properties file and able to output the analog audio of both files simultaneously.

25. The device according to claim 24, characterized by said code-input element being a bar code reader.

26. The device according to claim 24, characterized by said commercial product being selected of a group formed by commercial musical compact disk (CD), a commercial digital audiocassette or a commercial digital video disk (DVD).

27. The device according to claim 24, characterized by including an audio-rhythmic VU-meter mounted on its front.

28. The device according to claim 24, characterized by at least one sonorous playback comprises a loudspeaker or an earpiece.

29. The device according to claim 24, characterized by said keyboard generates a signal that is interpreted by the control software to select the track or musical theme.

30. A security method against non-authorized copies of the device according to claim 24, characterized by further protecting the control software of said device and comprising the steps of:
C1) inputting a secret unique client code, with blocking of the operation in case of differing with respect to the one recorded in the control software;
C2) generating three encrypted keys with algorithms with different coding, the execution password, the update password and the credit table, based on said secret client code inputted in the previous step;
C3) reading of the original code numbers of said magnetic memory element and said BIOS chip physically installed in the device;
C4) reading in the control software of the number of original code of said magnetic memory element, reading of the code of BIOS chip, blocking of the operation of the device when a mismatch is detected in the reading step of previous step C3);
C5) connecting a security module based on a RISC processor, containing a FLASH type memory and an EEPROM memory, containing an authorization for operation password;
C6) reading of the authorization for operation password contained in the module on the part of the control software, with blocking of operation of the device in case of mismatch;
C7) generating and storing a counter of events and an index of in-course credits in said EEPROM memory;
C8) storing the client code, the execution password, the update password and the table of credits in said Flash memory;
C9) defining an initial value of the counter of events and decreasing the number in the counter of events by one unit whenever an update is carried out, until reaching zero, and further blocking the operation of the device;
C10) entering a new update password which, if matching with the existing one in the Table of Credits will generate a new amount of allowed updates

31. An electronic security arrangement against non-authorized copies, for carrying out the security method according to claim 30, characterized by including: a RISC processor type, an EEPROM memory and a flash memory.
